Europäisches Patentamt

European Patent Office

Office européen des brevets

(19)

(11) Veröffentlichungsnummer: **0 376 369 B1**

# (12) EUROPÄISCHE PATENTSCHRIFT

(45) Veröffentlichungstag der Patentschrift: **20.07.94**

(51) Int. Cl.5: **G02F 1/09**, G02F 1/095

(21) Anmeldenummer: **89203132.9**

(22) Anmeldetag: **11.12.89**

(54) **Magnetooptischer Wellenleiter.**

(30) Priorität: **16.12.88 DE 3842408**

(43) Veröffentlichungstag der Anmeldung:
**04.07.90 Patentblatt 90/27**

(45) Bekanntmachung des Hinweises auf die
Patenterteilung:
**20.07.94 Patentblatt 94/29**

(84) Benannte Vertragsstaaten:
**DE FR GB IT**

(56) Entgegenhaltungen:
**EP-A- 0 205 220**
**EP-A- 0 313 248**

**PATENT ABSTRACTS OF JAPAN, Band 8, Nr. 38 (P-255)[1475], 18. Februar 1984;& JP-A-58 190 904**

**PATENT ABSTRACTS OF JAPAN, Band 9, Nr. 101 (P-353)[1824], 2. Mai 1985;& JP-A-59 224 819**

**OPTICS COMMUNICATIONS, Band 19, Nr. 1, Oktober 1976, Seiten 143-146; M. MONERIE et al.: "Dispositifs magnetooptiques en couches minces a accord de phase: Utilisation d'une double heteroepitaxie de grenats ferri-** **magnetiques"**

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT**

(72) Erfinder: **Hemme, Heinrich, Dr.-rer.-nat.**
**Grönländer Damm 73**
**D-2000 Hamburg 73(DE)**

(74) Vertreter: **Koch, Ingo, Dr.-Ing. et al**
**Philips Patentverwaltung GmbH,**
**Wendenstrasse 35c**
**D-20097 Hamburg (DE)**

EP 0 376 369 B1

Rank Xerox (UK) Business Services
(3.10/3.09/3.3.3)

**Beschreibung**

Die Erfindung bezieht sich auf einen magnetooptischen Wellenleiter mit einer auf einer Substratschicht aufgebrachten wellenführenden magnetooptischen Schicht, mit einer auf die magnetooptische Schicht ganzflächig mit gleichmäßiger Dicke aufgebrachten Dünnschicht, welche aus einem optisch transparenten nicht metallischen Material besteht und deren Brechungsindex kleiner als die Brechungsindizes der magnetooptischen Schicht und der Substratschicht ist, und deren Dicke kleiner als 0,3 $\mu$m ist.

Ein derartiger Wellenleiter ist in der GB-A 1 529 374 beschrieben. Insbesondere bei der Verwendung für optische Isolatoren und Zirkulatoren besteht das Problem der Anpassung der Ausbreitungskonstanten $\beta_{TE}$ und $\beta_{TM}$ der im Wellenleiter führbaren TE-Moden bzw. TM-Moden. Deren Differenz $\Delta\beta$ muß für eine gute Isolierwirkung einen genau bestimmten Wert aufweisen. Für die meisten Anwendungen muß $\Delta\beta = 0$ sein.

Ein gewünschter Wert $\Delta\beta$ kann beim epitaxialen Aufwachsen einer magnetooptischen Schicht nicht mit hinreichender Genauigkeit erzielt werden. Toleranzbedingte Schichtabweichungen von weniger als 0,1 $\mu$m ergeben bereits untragbare Änderungen des Werts $\Delta\beta$. Deshalb sind Korrekturmaßnahmen erforderlich, um eine Phasenanpassung zu erreichen. Im bekannten Fall dient dazu eine mit Abstand zur magnetooptischen Schicht aufgebrachte Metallschicht. Die genau erforderliche Einstellung des Abstandes bereitet Schwierigkeiten.

Durch die ältere, am 26.4.89 veröffentlichte EP-A 03 13 248 ist ein Verfahren zur Herstellung eines magnetooptischen Wellenleiters bekannt, bei welchem zunächst eine magnetooptische Schicht auf eine Substratschicht aufgebracht wird. Auf diese Schicht wird eine Dünnschicht aus optisch transparentem Material ($SiO_2$) aufgebracht, deren Brechungsindex kleiner ist als die Brechungsindizes der magnetooptischen Schicht und der Substratschicht, und deren Dicke derart bestimmt ist, daß der Wert der Differenz $\Delta\beta$ der Ausbreitungskonstanten $\beta_{TM}$ einer transversal magnetischen Welle und $\beta_{TE}$ einer transversal elektrischen Welle einen vorgegebenen Wert hat. In dieser Druckschrift ist auch beschrieben, daß die Dünnschicht in Form von mehreren Einzelschichten aufgebracht werden kann, und daß nach einer oder mehreren Beschichtungen Kontrollmessungen des erreichten Wertes von $\Delta\beta$ durchgeführt werden können, und daß die magnetooptische Schicht mit einer Dicke hergestellt wird, welche kleiner als die ohne Dünnschicht zur Erzielung des gewünschten Werten von $\Delta\beta$ erforderliche Dicke ist.

Nach Optoelektr. Magazin 87, Seiten 238 - 246 kann auch eine anisotrope Deckschicht, welche aus gitterartig aufgedampften Streifen besteht, zur Phasenanpassung verwendet werden. Die Herstellung dieser bekannten Deckschicht ist aufwendig. Die Streifenperiode und die Streifenbreite können zwar theoretisch derart gewählt werden, daß z.B. ein Wert $\Delta\beta = 0$ resultiert. In der Praxis läßt sich dieser angestrebte Idealzustand aber nicht hinreichend sicher und genau erreichen. Einerseits ist eine theoretische Vorausbestimmung der Streifenbreite und der Streifenperiode relativ unsicher und andererseits können die erzielten Daten wegen unvermeidbarer Herstellungstoleranz vom gewollten Wert erheblich abweichen.

Ein in Proc. ECOC, Barcelona, 1986, beschriebenes Verfahren, bei welchem die Einstellung von $\Delta\beta$ durch gezielt von außen aufgebrachte mechanische Spannung möglich ist, erfordert aufwendige und sperrige Zusatzeinrichtungen.

Der Erfindung liegt die Aufgabe zugrunde, einen Wellenleiter der eingangs genannten Art anzugeben, welcher kompakt aufgebaut ist und bei welchem ein gewünschter Wert von $\Delta\beta$ auf einfache Art genau erzielbar ist.

Die Lösung gelingt dadurch, daß die Dünnschicht aus amphiphilen Molekülen besteht, deren Längsachsen senkrecht zur magnetooptischen Schicht ausgerichtet sind.

Erfindungsgemäß ergibt sich ein Vierschicht-Wellenleiter, bei welchem zwischen den praktisch wie unendlich dicke Schichten wirkenden Randschichten, der Substratschicht und der Luftschicht, nicht nur die magnetooptische Schicht, sondern zusätzlich eine zwischen dieser und der Luftschicht aufgebrachte Dünnschicht vorgesehen ist. Eine solche Dünnschicht muß optisch dämpfungsarm und so dünn sein, daß sowohl sie als auch die darüberliegende Luftschicht die Feldverteilung in der magnetooptischen Schicht beeinflußt. In der Dünnschicht soll wie in der Luftschicht die Feldstärke nach einer e-Funktion abfallen und nicht gemäß sin- oder cos- Funktionen, wie in der eigentlichen magnetooptischen leitenden Kernschicht.

Der jeweils erforderliche Wert der Dicke der Dünnschicht hängt von den physikalischen und geometrischen Daten der magnetooptischen Schicht sowie natürlich von dem Brechungsindex des Dünnschichtmaterials ab und läßt sich theoretisch derart ermitteln, daß eine gewünschte Änderung des Wertes $\Delta\beta$ erreicht wird.

Eine unmittelbare Anlage der Dünnschicht an der magnetooptischen Schicht ohne Ausbildung einer optisch störenden Grenzschicht ergibt sich bereits durch die van der Waalschen Haltekräfte. Es ist erforderlichenfalls möglich, chemische Brücken zwischen Atomen der Dünnschicht und der magnetooptischen Schicht auszubilden. Weiterhin kann es vorteilhaft sein, die Moleküle der Dünnschicht chemisch zu verketten.

Gemäß einer besonders vorteilhaften Lösung besteht die Dünnschicht aus einer Mehrzahl von Einzelbeschichtungen. Dabei können nach und nach Einzelbeschichtungen aufgebracht werden, bis der gewünschte Wert $\Delta\beta$ gemessen wird.

Jede Einzelbeschichtung ergibt einen sehr kleinen $\Delta\beta$ Sprung, so daß der Sollwert mit äußerster Genauigkeit ansteuerbar ist.

Als amphiphile Moleküle sind z.B. Arachinsäure oder auch Stearinsäure geeignet. Dabei handelt es sich um langkettige Moleküle, deren eines Ende ein polares und deren anderes Ende ein apolares Verhalten aufweist.

Bei einem vorteilhaften Verfahren zur Herstellung eines erfindungsgemäßen magnetooptischen Wellenleiters wird zunächst auf eine Substratschicht eine wellenführende magnetooptische Schicht aufgebracht. Darauf wird eine Dünnschicht 8 aus optisch transparenten amphiphilen Molekülen derart aufgebracht, daß die Längsachsen dieser Moleküle senkrecht zur magnetooptischen Schicht ausgerichtet sind, und deren Brechungsindex kleiner ist als die Brechungsindizes der magnetooptischen Schicht und der Substratschicht, und deren Dicke derart bestimmt ist, daß der gemessene Wert der Differenz $\Delta\beta$ der Ausbreitungskonstanten $\beta_{TM}$ einer transversal magnetooptischen Welle und $\beta_{TE}$ einer transversal elektrischen Welle einen vorgegebenen Wert, insbesondere $\Delta\beta = 0$ hat.

Gemäß einer bevorzugten Lösung werden die Einzelbeschichtungen durch Aufbringen amphiphiler Moleküle nach dem Langmuir-Blodgett-Verfahren hergestellt. Das an sich bekannte Langmuir-Blodgett-Verfahren ist in "Advances in Physics" 1985, Seiten 475-512 näher beschrieben. Dabei werden Einzelschichten mit einer Dicke der Länge der Moleküle der amphiphilen Materialien aufgebracht. Folglich ergeben sich sehr geringe Dicken der Einzelbeschichtungen, welche in entsprechender Anzahl ein äußerst genaues Ansteuern des gewünschten Wertes von $\Delta\beta$ ermöglichen.

In der Praxis wird die magnetooptische Schicht mit einer Dicke hergestellt, welche kleiner als die ohne Dünnschicht zur Erzielung eines gewünschten Wertes von $\Delta\beta$ erforderliche Dicke ist. Die magnetooptische Schicht wird also zunächst bewußt kleiner als der ohne Dünnschicht erforderliche Wert, aber diesem Wert möglichst nahe kommend, bemessen. Die Fehldicke wird durch die Dünnschicht ersetzt, welche durch aufeinanderfolgendes Aufbringen von Einzelschichten hergestellt wird, bis der gewünschte Wert von $\Delta\beta$ erreicht ist.

Die Erfindung wird anhand der Beschreibung eines in der Zeichnung dargestellten bevorzugten Ausführungsbeispiels näher erläutert.

Fig. 1    zeigt schematisch eine Anordnung zur Herstellung eines erfindungsgemäßen Wellenleiters.

Fig. 2    zeigt für drei verschiedene magnetooptische Schichtaufbauten den Zusammenhang zwischen der Dicke $d_2$ der Dünnschicht und der dadurch kompensierten Fehldicke $\Delta d_1$ der magnetooptischen Schicht.

Auf dem im Behälter 1 befindlichen Wasser 2 wurden Moleküle der Arachinsäure ausgebreitet und derart zusammengeschoben, daß eine dichte Einmolekülschicht 3 aus aufgerichteten Arachinmolekülen entstand, welche mit ihrem polaren Ende zur Wasseroberfläche gerichtet sind. Bis unter den Wasserspiegel wurde ein Wellenleiterrohling getaucht, der aus einer GGG-Substratschicht 4 und einer epitaxial aufgewachsenen magnetooptischen YIG-Schicht 5 besteht. An die nicht zu beschichtende Endfläche der Substratschicht 4 ist eine Abdeckung 6 gelegt. Beim Herausziehen des Wellenleiterrohlings in Richtung des Pfeils 7 werden die Moleküle der Arachinsäure auf die magnetooptische Schicht 5 übertragen und haften an ihr mit ihrem polaren Ende. Dabei müssen natürlich in bekannter Weise hier nicht dargestellte Einrichtungen zum Nachschieben der Arachinmoleküle auf dem Wasserspiegel vorgesehen werden.

Nach einer oder einer Mehrzahl von in der beschriebenen Weise aufgebrachten Einzelbeschichtungen wird der beschichtete Wellenleiterrohling in die oben dargestellte Position in den Strahlengang einer Meßeinrichtung geschwenkt. Dort wird der erreichte Istwert von $\Delta\beta$ ermittelt und kontrolliert, ob bereits der Sollwert $\Delta\beta = 0$ erreicht wurde. Die Messung erfolgt in bekannter Weise. Von einer Lichtquelle 9 ausgehende Strahlung wird über einen Polarisator 10 und ein Objektiv 11 auf die Stirnfläche der magnetooptischen Schicht 5 fokussiert. Infolge der Fokussierung ist gesichert, daß die von der magnetooptischen Schicht führbaren Moden angeregt werden. Die austretende Strahlung wird über ein Objektiv 12, über einen dreheinstellbaren Kompensator 13 und einen dreheinstellbaren Polarisator 14 geleitet. Die Lichtintensität wird mit dem optischen Detektor 15 bei zwei um 90° gedrehten, den Schwingungsebenen der Moden entsprechenden Stellungen des Polarisators 10 gemessen. Bei $\Delta\beta = 0$ darf aus dem Wellenleiter kein elliptisch polarisiertes Licht austreten.

Sollte sich ergeben, daß nach einer Beschichtungsfolge noch nicht der Sollwert von $\Delta\beta$ bzw. der Wert $\Delta\beta = 0$ erreicht ist, können in der beschriebenen Weise weitere Beschichtungen aufgebracht werden, bis

der Sollwert von $\Delta\beta$ bzw. $\Delta\beta = 0$ gemessen wird.

Man erhält schließlich einen kompakten planaren magnetooptischen Wellenleiter mit äußerst genauem Sollwert von $\Delta\beta$. Dabei sind keine für die Anwendung des Wellenleiters störenden äußeren Justiereinrichtungen erforderlich.

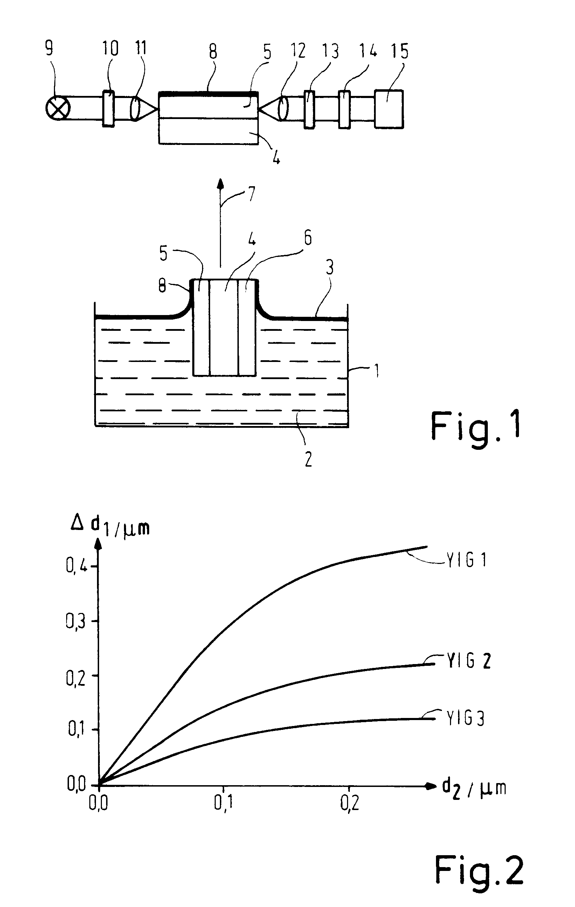

Die Dicke $d_2$ der aufzubringenden Dünnschicht 8 hängt davon ab, um welches Maß $\Delta d_1$ die magnetooptische Schicht 5, bezogen auf $d_2 = 0$, zu dünn ist. Diesen Zusammenhang zur Erzielung von $\Delta\beta = 0$ für eine Licht-Wellenlänge $\lambda = 1,3\ \mu m$ zeigt Fig. 2 für drei verschiedenartige magnetooptische Schichtaufbauten YIG 1, YIG 2 und YIG 3. Der Brechungsindex der Substratschicht 4 ist jeweils $n_s = 1,95$ und der Brechungsindex der Dünnschicht 8 ist jeweils $n_d = 1,5$ (jeweils in allen drei Koordinatenrichtungen gleich).

Der Brechungsindex der magnetooptischen Schicht in Ausbreitungsrichtung des Lichts und senkrecht dazu in der Schichtebene ist in allen drei Fällen $n''_m = 2,2$. In orthogonaler Richtung zur Schichtebene gelten für Fig. 2 die Brechungsindizes $n'_{\underline{m}}$ und die Dicken $d_1$ in $\mu m$ wie folgt:

| für YIG 1: | $n'_{\underline{m}} = 2,20002$ | $d_1 = 10,0\text{-}\Delta d_1$ |
|---|---|---|
| für YIG 2: | $n'_{\underline{m}} = 2,2002$ | $d_1 = 4,5\text{-}\Delta d_1$ |
| für YIG 3: | $n'_{\underline{m}} = 2,202$ | $d_1 = 2,0\text{-}\Delta d_1$ |

**Patentansprüche**

1. Magnetooptischer Wellenleiter mit einer auf einer Substratschicht (4) aufgebrachten wellenfuhrenden magnetooptischen Schicht (5), mit einer auf die magnetooptische Schicht (5) ganzflächig mit gleichmäßiger Dicke aufgebrachten Dünnschicht, welche aus einem optisch transparenten nicht metallischen Material besteht und deren Brechungsindex kleiner als die Brechungsindizes der magnetooptischen Schicht (5) und der Substratschicht (4) ist, und deren Dicke kleiner als 0,3 $\mu$m ist,
   dadurch gekennzeichnet, daß die Dünnschicht (8) aus amphiphilen Molekülen besteht, deren Längsachsen senkrecht zur magnetooptischen Schicht (5) ausgerichtet sind.

2. Wellenleiter nach Anspruch 1,
   dadurch gekennzeichnet, daß die Dünnschicht (8) durch van der Waalsche Kräfte an der magnetooptischen Schicht (5) gehalten ist.

3. Wellenleiter nach Anspruch 1 oder 2,
   dadurch gekennzeichnet, daß die Dünnschicht (8) aus einer Mehrzahl von Einzelbeschichtungen besteht.

4. Verfahren zur Herstellung eines magnetooptischen Wellenleiters, bei welchem zunächst auf eine Substratschicht (4) eine wellenfünrende magnetooptische Schicht (5) aufgebracht wird, wobei auf die magnetooptische Schicht (5) eine Dünnschicht (8) aus optisch transparenten amphiphilen Molekülen derart aufgebracht wird, daß deren Längsachsen senkrecht zur magnetooptischen Schicht (5) ausgerichtet sind, und deren Brechungsindex kleiner als die Brechungsindizes der magnetooptischen Schicht (5) und der Substratschicht (4), und deren Dicke derart bestimmt ist, daß der gemessene Wert der Differenz $\Delta\beta$ der Ausbreitungskonstanten $\beta_{TM}$ einer transversal magnetischen Welle und $\beta_{TE}$ einer transversal elektrischen Welle einen vorgegebenen Wert, insbesondere $\Delta\beta = 0$, hat.

5. Verfahren nach Anspruch 4,
   dadurch gekennzeichnet, daß die Dünnschicht (8) in Form von mehreren Einzelbeschichtungen aufgebracht wird, und daß nach einer oder mehreren Beschichtungen Kontrollmessungen des erreichten Wertes von $\Delta\beta$ durchgeführt werden.

6. Verfahren nach Anspruch 4 oder 5,
   dadurch gekennzeichnet, daß die amphiphilen Moleküle nach dem Langmuir-Blodgett-Verfahren aufgebracht werden.

7. Verfahren nach einem der Ansprüche 4 bis 6,
   dadurch gekennzeichnet, daß die magnetooptische Schicht (5) mit einer Dicke hergestellt wird, welche kleiner als die ohne Dünnschicht (8) zur Erzielung des gewünschten Wertes von $\Delta\beta$ erforderliche Dicke

ist.

## Claims

1. A magneto-optical waveguide comprising a wave-propagating magneto-optical layer (5) which is applied to a substrate layer (4), said magneto-optical layer (5) being coated over its entire surface area with a thin film of uniform thickness which consists of an optically transparent, non-metallic material whose index of refraction is lower than the indices of refraction of the magneto-optical layer (5) and the substrate layer (4), and the thickness of said thin film being less than 0.3 $\mu$m, characterized in that the thin film (8) consists of amphiphilic molecules whose longitudinal axes are orientated perpendicularly to the magneto-optical layer (5).

2. A waveguide as claimed in Claim 1, characterized in that the thin film (8) is held onto the magnetooptical layer (5) by van der Waals' forces.

3. A waveguide as claimed in Claim 1 or 2, characterized in that the thin film (8) consists of a plurality of individual films.

4. A method of manufacturing a magneto-optical waveguide, in which first a wave-propagating magneto-optical layer (5) is deposited on a substrate layer (4), and subsequently a thin film (8) of optically transparent amphiphilic molecules is applied to this magneto-optical layer (5) in such a manner that the longitudinal axes of said molecules are orientated perpendicularly to the magneto-optical layer (5) and their index of refraction is smaller than the indices of refraction of the magneto-optical layer (5) and the substrate layer (4), and their thickness is determined such that the measured value of the difference $\Delta\beta$ between the propagation constants $\beta_{TM}$ of a transverse magnetic wave and $\beta_{TE}$ of a transverse electric wave has a predetermined value, more specifically $\Delta\beta = 0$.

5. A method as claimed in Claim 4, characterized in that, the thin film (8) is deposited in the form of a plurality of individual coatings, and that after one or several coating operations measurements are effected to check the values of $\Delta\beta$ obtained.

6. A method as claimed in Claim 4 or 5, characterized in that the amphiphilic molecules are deposited in accordance with the Langmuir-Blodgett method.

7. A method as claimed in any one of the Claims 4 to 6, characterized in that the magneto-optical layer (5) is manufactured in a thickness which, in absence of a thin film (8), is smaller than the thickness required to obtain the desired value of $\Delta\beta$.

## Revendications

1. Guide d'ondes magnéto-optique muni d'une couche magnéto-optique de guidage d'ondes (5) appliquée sur une couche de substrat (4), d'une couche mince appliquée dans une épaisseur uniforme sur toute la surface de la couche magnéto-optique (5) et constituée par un matériau non métallique transparent optique, dont l'indice de réfraction est inférieur aux indices de réfraction de la couche magnéto-optique (5) et de la couche de substrat (4) et dont l'épaisseur est inférieure à 0,3 $\mu$m, caractérisé en ce que la couche mince (8) est constituée par des molécules amphiphiliques, dont les axes longitudinaux s'étendent perpendiculairement à la couche magnéto-optique (5).

2. Guide d'ondes selon la revendication 1, caractérisé en ce que la couche mince (8) est maintenue par des forces de van der Waals à la couche magnéto-optique (5).

3. Guide d'ondes selon la revendication 1 ou 2, caractérisé en ce que la couche mince (8) est constituée par plusieurs couches séparées.

4. Procédé pour la réalisation d'un guide d'ondes magnéto-optique, selon lequel une couche magnéto-optique de guidage d'ondes (5) est appliquée d'abord sur une couche de substrat (4), après quoi une couche mince (8) en molécules amphiphiliques optiquement transparentes est appliquée sur la couche magnéto-optique (5) de façon que leurs axes longitudinaux s'étendent perpendiculairement à la couche magnéto-optique (5) et dont l'indice de réfraction est inférieur aux indices de réfraction de la couche magnéto-optique (5) et de la couche de substrat (4), et dont l'épaisseur est tellement déterminée que la valeur mesurée de la différence $\Delta\beta$ des constantes de propagation $\beta_{TM}$ d'une onde magnétique transversale $\beta_{TE}$ d'une onde électrique transversale présente une valeur déterminée notamment $\Delta\beta$ = 0.

5. Procédé selon la revendication 4, caractérisé en ce que la couche mince (8) est appliquée sous forme de couches séparées et en ce qu'après l'application d'une ou de plusieurs couches sont effectuées des mesures de contrôle de la valeur obtenue de $\Delta\beta$.

6. Procédé selon la revendication 4 ou 5, caractérisé en ce que les molécules amphiphiliques sont appliquées selon le procédé Langmuir-Blodgett.

7. Procédé selon l'une des revendications 4 à 6, caractérisé en ce que la couche magnéto-optique (5) est réalisée dans une épaisseur inférieure à l'épaisseur requise pour obtenir la valeur désirée de $\Delta\beta$ sans couche mince (8).

Fig.1

Fig.2